(19) **Europäisches Patentamt**

**European Patent Office**

**Office européen des brevets**

(11) **EP 0 667 516 B1**

(12) **FASCICULE DE BREVET EUROPEEN**

(45) Date de publication et mention
de la délivrance du brevet:
**16.09.1998  Bulletin 1998/38**

(51) Int Cl.⁶: **G01M 15/00**

(21) Numéro de dépôt: **95400276.2**

(22) Date de dépôt: **10.02.1995**

(54) **Procédé de détection des ratés de combustion d'un moteur à combustion interne**

Verfahren zur Erkennung von Fehlzündung in einer Brennkraftmaschine

Detecting method of misfire in an internal combustion engine

(84) Etats contractants désignés:
**BE DE ES GB**

(30) Priorité: **11.02.1994  FR 9401556**

(43) Date de publication de la demande:
**16.08.1995  Bulletin 1995/33**

(73) Titulaire: **RENAULT**
**92109 Boulogne-Billancourt (FR)**

(72) Inventeurs:
• **Hornewer, Jean-Marc**
  **F-95800 Cergy (FR)**
• **Marcheguet, Eric**
  **F-78400 Chatou (FR)**
• **Rousseau, Christian**
  **F-92160 Antony (FR)**

(74) Mandataire: **Fernandez, Francis Lionel et al**
**Régie Nationale des Usines Renault SA**
**Service 0267 - Bâtiment J2**
**860, Quai de Stalingrad**
**B.P. 103**
**92109 Boulogne Billancourt (FR)**

(56) Documents cités:
FR-A- 2 681 425          FR-A- 2 681 426
FR-A- 2 686 653          US-A- 5 237 862

## Description

La présente invention concerne un procédé de détection des ratés de combustion d'un moteur à combustion interne équipant notamment un véhicule automobile.

Dans le cadre des réglementations antipollution telles que la norme américaine OBD2 (On Board Diagnostic Level 2), il est prévu que les systèmes électroniques de contrôle moteur qui équipent les véhicules automobiles puissent diagnostiquer certains dysfonctionnements du moteur qui ont un impact sur les émissions de polluants.

C'est ainsi qu'il est prévu d'implanter dans les systèmes électroniques de contrôle moteur futurs, des dispositifs capables de diagnostiquer le bon fonctionnement de la sonde à oxygène ou le système d'EGR (recirculation des gaz d'échappement). La reconnaissance d'un défaut de fonctionnement agissant sur le niveau de pollution engendrant soit, l'activation de modes de fonctionnement dégradés et/ou l'allumage d'un voyant au tableau de bord prévenant le conducteur (réglementations peu sévères) soit, l'arrêt du véhicule (réglementations strictes).

La norme américaine OBD2 et les normes européennes équivalentes prévoient d'imposer la détection des ratés de combustion et d'identifier le cylindre responsable. Le système de détection doit ainsi fournir un chiffre représentant le pourcentage de ratés de combustion sur un nombre donné de cycles moteur.

Les équipementiers et les constructeurs automobiles ont donc développé un certain nombre de techniques de détection des ratés de combustion encore appelés misfire.

On peut citer la méthode de l'accéléromètre qui consiste à détecter un raté de combustion par analyse de la variation d'accélération longitudinale du véhicule.

La détection des ratés est également possible à partir des mesures par sonde à oxygène proportionnelle. De même on peut utiliser un capteur de pression chambre. On peut encore effectuer la mesure de la tension d'arc ou du courant d'ionisation. On peut enfin déduire l'existence de ratés de combustion de la mesure de la vitesse instantanée du vilebrequin.

Si tous les dispositifs connus arrivent à détecter de manière plus ou moins correcte l'existence de ratés de combustion dans un moteur à combustion interne, leur mise en oeuvre s'avère délicate et leur coût assez élevé.

Il est également connu par la demande de brevet français FR-A-2 686 653 au nom de la Demanderesse de détecter facilement, sans surcoût matériel et avec un surcoût logiciel faible, les ratés de combustion d'un moteur à explosion.

Ce procédé qui s'appuie sur le dispositif appelé "Capteur de Couple B4" qui a fait l'objet des demandes de brevet français FR-A-2 681 425 et FR-A-2 681 425 déposées par la Demanderesse, comprend essentiellement les étapes suivantes :

- calculer, à partir de chaque valeur de couple produite par le dispositif de mesure après chacune des combustions du mélange gazeux dans les cylindres du moteur, une grandeur statistique représentative de la moyenne des valeurs de couple sur un nombre donné de combustions ;
- calculer l'écart, entre la valeur du couple et la valeur statistique ;
- calculer le rapport entre l'écart ainsi calculé et la valeur statistique ;
- comparer le rapport à une valeur de seuil prédéterminée dépendant des conditions de fonctionnement du moteur ;
- et, produire une valeur indiquant l'existence d'un raté de combustion quand le rapport est inférieur à ladite valeur de seuil.

Un tel procédé présente toutefois l'inconvénient d'utiliser des seuils de détection déterminés en fonction de cartographies de paramètres moteur calibrées lors de la mise au point du moteur. Ces seuils ne tiennent donc qu'imparfaitement compte de l'"instabilité" de la combustion qui peut être variable d'un moteur à l'autre compte tenu des dispersions de fabrication, ou de l'usure des pièces. Par ailleurs, le procédé est sensible à des événements non contrôlés agissant sur la vitesse instantanée du vilebrequin tel qu'un mauvais état de la route ou encore des à-coups de transmission.

L'objet de la présente invention est donc de perfectionner le procédé décrit ci-dessus, en proposant un procédé de détection des ratés de combustion apte à filtrer les variations de combustion autres que celles liées aux ratés de combustion proprement dit.

Selon l'invention, le procédé pour détecter un raté de combustion survenant dans au moins un cylindre d'un moteur à combustion interne est caractérisé en ce qu'il comprend les opérations suivantes :

- Produire à chaque combustion une valeur caractéristique de la combustion ;
- calculer à partir cette valeur caractéristique la valeur d'une première grandeur statistique représentative de la moyenne des valeurs caractéristiques sur un nombre donné de combustions ;
- calculer à partir de la valeur caractéristique la valeur d'une seconde grandeur statistique représentative des variations des valeurs caractéristiques sur un nombre donné de combustions ;
- calculer à partir de la valeur de la première grandeur statistique et de la valeur de la seconde grandeur statistique, une valeur de seuil ;
- produire une valeur indiquant l'existence d'un raté de combustion quand la valeur caractéristique de la combustion est supérieure à la valeur de seuil.

Selon une autre caractéristique du procédé pour détecter un raté de combustion objet de l'invention, la seconde grandeur statistique représentative des variations des valeurs caractéristiques est représentative de l'écart type des valeurs caractéristiques.

Selon une autre caractéristique du procédé pour détecter un raté de combustion objet de l'invention, il comprend les opérations suivantes :

- Produire à chaque combustion une valeur caractéristique de ladite combustion ;
- calculer à partir de cette valeur caractéristique une première grandeur statistique représentative de la moyenne des valeurs caractéristiques sur un nombre donné de combustions ;
- calculer l'écart entre la première grandeur statistique et la valeur caractéristique ;
- calculer à partir de chaque écart entre la première grandeur statistique et la valeur caractéristique une seconde grandeur statistique représentative de l'écart type des valeurs caractéristiques de la combustion sur un nombre donné de combustions ;
- comparer la valeur d'écart entre la première grandeur statistique et la valeur caractéristique à une valeur de seuil déduite de la seconde grandeur statistique ;
- produire une valeur indiquant l'existence d'un raté de combustion quand la valeur d'écart entre la première grandeur statistique et la valeur caractéristique est supérieure à la valeur de seuil.

Selon une autre caractéristique du procédé pour détecter un raté de combustion objet de l'invention, la valeur caractéristique de la combustion est la valeur représentative du couple générée par la combustion produite par des moyens de mesure appropriés.

Selon une autre caractéristique du procédé pour détecter un raté de combustion objet de l'invention, les valeurs de la première et/ou de la seconde grandeur statistique (MCg',n, ETCg',n) sont calculées en ne tenant compte que des valeurs caractéristiques qui ne correspondent pas à des ratés de combustion.

Selon une autre caractéristique du procédé pour détecter un raté de combustion objet de l'invention, il comporte l'opération supplémentaire suivante :

- produire une valeur indiquant l'existence d'un raté de combustion pour un cylindre donné du moteur.

Selon une autre caractéristique du procédé pour détecter un raté de combustion objet de l'invention, les valeurs caractéristiques de la combustion sont différenciées en fonction des cylindres d'origine correspondants et en ce que les différentes opérations de calcul sont opérées cylindre par cylindre de façon alors à produire directement une valeur indiquant l'existence d'un raté de combustion pour un cylindre donné du moteur.

Selon une autre caractéristique du procédé pour détecter un raté de combustion objet de l'invention, il comporte les opérations supplémentaires suivantes :

- calculer à partir des valeurs indiquant l'existence d'un raté de combustion dans un cylindre donné du moteur, le nombre total de ratés de combustion survenus pendant un nombre prédéterminé de cycles moteur ;
- comparer le nombre total de ratés de combustion à une valeur de seuil prédéterminée ;
- produire une valeur indiquant l'existence d'un nombre anormal de ratés de combustion dans un cylindre donné du moteur quand le nombre de ratés de combustion est supérieur à ladite valeur de seuil.

Selon une autre caractéristique du procédé pour détecter un raté de combustion objet de l'invention, les valeurs indiquant la présence ou non d'un nombre anormal de ratés de combustion dans un cylindre donné du moteur sont utilisées par des moyens de visualisation.

Selon une autre caractéristique du procédé pour détecter un raté de combustion objet de l'invention, la production d'une valeur indiquant l'existence d'un raté de combustion est suspendue tend que la valeur de la seconde grandeur statistique est supérieure à une valeur de seuil prédéterminée.

On comprendra mieux les buts, aspects et avantages de la présente invention, d'après la description donnée ci-après de différents modes de réalisation de l'invention, ces modes de réalisation étant donnés à titre d'exemples non limitatifs, en se référant au dessin annexé, dans lequel :

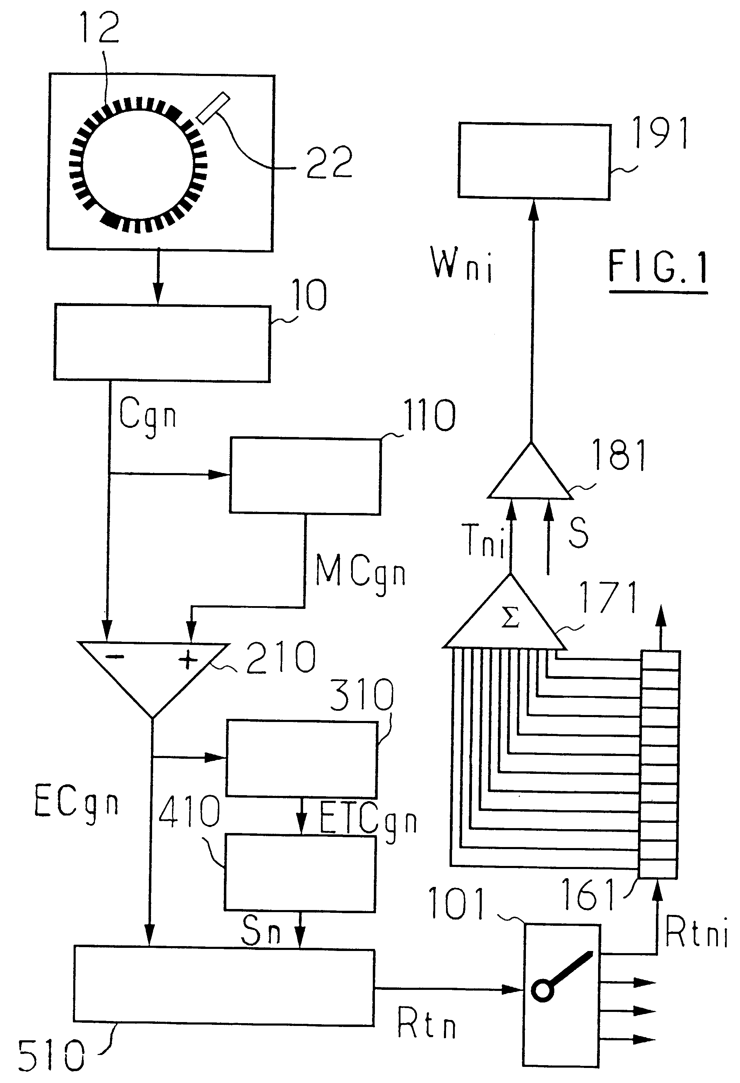

- la figure 1 est un schéma fonctionnel des différents éléments constitutifs d'un dispositif de mise en oeuvre du procédé selon l'invention.

Conformément à la figure 1, on a représenté un dispositif de mise en oeuvre du procédé de détection des ratés de combustion équipant un moteur à combustion interne multicylindre, par exemple du type à quatre cylindres en ligne et à quatre temps. Seuls les éléments nécessaires à la compréhension du dispositif ont été figurés.

Le dispositif objet de l'invention procède par analyse d'une grandeur représentative caractéristique du niveau des combustions opérées dans chacun des cylindres du moteur. Une telle grandeur peut par exemple être l'accélération instantanée du vilebrequin (cf. les demandes de brevets DE-3.939.113 ou DE-4.002.208), ou encore la tension aux bornes des bougies, ou encore le couple dont le calcul d'une valeur représentative est plus particulièrement divulgué dans les demandes de brevet français déposées par la Demanderesse n° 91/11273 et 91/11274 relatives à un "procédé et dispositif de mesure du couple d'un moteur thermique à combustion interne".

Le dispositif décrit conformément à la figure 1, utilise la mesure du couple fournie par des moyens appropriés, référencés 10. Ces moyens sont donc plus particulièrement détaillés dans les demandes de brevet français précitées n° 91/11273 et 91/11274.

Les moyens 10 opèrent donc la mesure d'une grandeur Cg représentative du couple généré à chaque combustion du mélange gazeux à partir de l'analyse du déplacement angulaire d'une couronne de mesure dentée 12, solidaire du volant d'inertie, par exemple la couronne de type standard montée sur les moteurs à allumage électronique.

A la couronne 12, est associé un capteur fixe 22, par exemple à réluctance variable, qui délivre un signal alternatif de fréquence proportionnelle à la vitesse de défilement des dents de la couronne, c'est-à-dire représentative de la vitesse instantanée du volant.

Ce signal alternatif, de fréquence proportionnelle à la vitesse de défilement des dents de la couronne fourni après traitement la valeur représentative du couple Cg, engendré par chaque combustion du mélange gazeux dans les cylindres du moteur. Comme cela est décrit dans les demandes de brevet précitées, cette valeur représentative du couple est obtenue à partir de l'analyse de la raie quatre du spectre du signal délivré par le capteur fixe 22 observant la roue dentée 12 solidaire du vilebrequin.

Lors du fonctionnement du moteur et à partir des valeurs successives de couple, calculées après chaque combustion par les moyens 10 et référencées $Cg,n$ pour caractériser la valeur de couple correspondante à la n-ième combustion de la période de fonctionnement du moteur en cours, le dispositif objet de l'invention opère alors dans un premier temps le calcul d'une grandeur statistique $MCg,n$ représentative de la moyenne des différentes valeurs de couple mesurées successivement sur l'ensemble des cylindres sur un horizon donné de mesures du couple, à savoir les N dernières (N valant par exemple 100).

Les moyens 110 mis en oeuvre pour obtenir cette grandeur statistique se composent par exemple d'un registre à décalage apte à stocker N valeurs du couple Cg (le stockage de la valeur $Cg,n$ coïncidant avec le déstockage de la valeur $Cg,n-N$), d'un sommateur pour additionner les valeurs contenues dans le registre à décalage et d'un diviseur par le nombre N.

La formule donnant $MCg,n$ est alors :

$$MCg,n = (1/N) * \sum_{i=n-(N-1)}^{i=n} ( Cg,i )$$

Les moyens 110 peuvent également, en variante de réalisation, être formés par un filtre passe-bas du premier ordre où tp la constante de filtrage vaut N. Dans ce cas, pour toute nouvelle valeur du couple $Cg,n$ la valeur statistique $MCg,n$ est déterminée à partir de la valeur statistique calculée précédemment $MCg,n-1$, à partir de la formule de récurrence suivante :

$$MCg,n = MCg,n-1 + ((Cg,n - (MCg,n-1)) / tp)$$

A partir de la valeur ainsi calculée de la grandeur statistique $MCg,n$ représentative de la moyenne des différentes valeurs de couple $Cg,n$ mesurées successivement sur l'ensemble des cylindres sur un horizon donné de mesures du couple, on détermine par des moyens soustracteurs 210, l'écart $ECg,n$ défini comme l'écart entre la valeur de couple $Cg,n$ et la valeur statistique $MCg,n$ :

$$ECg,n = MCg,n - Cg,n$$

Cet écart est donc représentatif des variations du couple moteur. Toutefois, la comparaison de cet écart à un seuil fixe prédéterminé en fonction du point de fonctionnement du moteur ne permet pas d'isoler de façon précise les seuls ratés de combustion, une telle méthode ne permettant pas de discriminer les ratés de combustion des instabilités de combustion engendrées par le veillissement du moteur, une route au revêtement dégradé, des à-coups de transmission ou encore par la mise en oeuvre du système EGR.

Pour isoler de façon fiable les seuls ratés de combustion, il s'avère donc indispensable d'élaborer un seuil variable S,n qui puisse prendre en compte les instabilités observées.

Une façon d'opérer, pour déterminer le seuil S,n consiste à considérer l'écart type ETCg,n des valeurs ECg,n sur un horizon donné de mesures du couple, à savoir par exemple les Q dernières (Q valant par exemple 100).

Les moyens 310 mis en oeuvre pour obtenir cette seconde grandeur statistique se composent par exemple d'un multiplicateur pour produire la valeur de l'écart ECg,n au carré $(ECg,n)^2$, d'un registre à décalage apte à stocker Q valeurs de l'écart $(ECg,n)^2$ (le stockage de la valeur $(ECg,n)^2$ coïncidant avec le déstockage de la valeur $(ECg,n-Q)^2$), d'un sommateur pour additionner les valeurs contenues dans le registre à décalage, de moyens extracteurs de la racine carrée (par exemple à partir de développements en série) et d'un diviseur par le nombre Q.

La formule donnant ETCg,n est alors :

$$ETCg,n = (1/Q) * \left( \sum_{i=n-(Q-1)}^{i=n} (ECg,i)^2 \right)^{1/2}$$

On en déduit alors le seuil S,n par la formule :

$$S,n = p * ETCg,n$$

où p est un nombre réel prédéterminé supérieur à 1, on peut par exemple prendre p=4.

La valeur S,n ayant été calculée, le dispositif de détection des ratés de combustion opère alors la comparaison entre l'écart ECg,n et le seuil S,n, un raté de combustion étant en effet caractérisé par la valeur de l'écart ECg,n qui est supérieure à la valeur de seuil S,n.

On peut bien évidemment utiliser en variante de réalisation pour calculer S,n non pas la formule de l'écart type précitée mais des formules approchées nécessitant moins de moyens de calcul et de place mémoire, comme par exemple la formule de récurrence suivante :

$$ETCg,n = (((Q-1)/Q * (ETCg,n-1)^2)+(1/Q*(ECg,n)^2))^{1/2}$$

On peut également utiliser en lieu et place de l'écart type, d'autres grandeurs statistiques représentatives de la variation des valeurs Cg,n autour de la moyenne MCg,n comme par exemple la moyenne des écarts ECg,n.

Le seuil S,n obtenu conformément à l'invention est donc directement lié au niveau d'instabilité du moteur, ce qui permet d'opérer de façon fiable la détection des seuls ratés de combustion. Grâce à un tel seuil automatiquement ajustable, un raté de combustion sera par exemple détecté lors d'une chute du couple de 15 % pour un moteur neuf, de 20% pour un moteur usagé et de 30 % lorsque le véhicule roule sur un secteur pavé. Il n'est donc plus nécessaire de prévoir des cartographies définissant la valeur de seuil en fonction des conditions de fonctionnement du moteur.

Les moyens 410 mis en oeuvre pour obtenir S,n se composent par exemple d'un multiplicateur. Le dispositif de détection des ratés de combustion opère ensuite la comparaison, par des moyens comparateurs 510 adaptés, entre la valeur de l'écart ECg,n et la valeur de seuil S,n. Ces moyens comparateurs délivrent alors une valeur Rt,n de type binaire : 1 si l'écart ECg,n est au-dessus du seuil S,n et 0 dans le cas contraire. Cette valeur Rt,n définit ainsi pour chacune des combustions s'il y a eu ou non un raté.

Il est possible par ailleurs de définir une variante de réalisation du procédé de détection des ratés de combustion selon l'invention par laquelle la détection des ratés de combustion est encore améliorée en éliminant du calcul des grandeurs statistiques ETCg,n et MCg,n l'incidence des ratés de combustion survenus durant la période observée. Pour ce faire, on opère dans le calcul des grandeurs statistiques, le remplacement de la valeur du couple correspondant à un raté de combustion par la dernière valeur antérieure ne correspondant pas à un raté de combustion.

En conservant les notations précédentes on utilise alors une grandeur corrigée Cg',n correspondant à la valeur Cg,n exceptée pour les valeurs correspondant à des ratés de combustion.

Après chaque calcul de Cg,n, on opère le calcule de Cg',n de la façon suivante.

On commence par poser :

$$Cg',n = Cg,n$$

On en déduit la grandeur MCg',n représentative de la moyenne des différentes valeurs de couple filtrées Cg',n sur un horizon donné de mesures du couple, l'écart type ETCg',n correspondant, et une première valeur de seuil S1,n :

$$S1,n = p1 * ETCg',n$$

où p1 est un nombre réel supérieur à 1 (éventuellement égal à la valeur p précitée)

On compare alors l'écart entre la moyenne MCg',n et la valeur de couple Cg,n, avec cette première valeur de seuil et suivant le résultat de cette comparaison on modifie ou non la valeur de Cg',n :

si MCg',n - Cg,n > S1,n alors Cg',n = Cg',n-1
sinon, Cg',n demeure inchangé.

On recalcule alors la grandeur MCg',n représentative de la moyenne des différentes valeurs de couple filtrées Cg',n sur un horizon donné de mesures du couple et l'écart type ETCg',n correspondant et on définit une seconde valeur de seuil S2,n par :

$$S2,n = p2 * ETCg',n$$

avec p2 nombre réel supérieur à 1 (éventuellement égal à p ou p1)

On compare alors l'écart entre la moyenne MCg',n et la valeur de couple Cg,n, avec cette seconde valeur de seuil S2,n et c'est cette dernière comparaison qui sert à caractériser la survenue d'un raté de combustion.

On en déduit donc comme précédemment une valeur Rt,n de type binaire : 1 si l'écart MCg',n - Cg,n est au-dessus du seuil S2,n et 0 dans le cas contraire, cette valeur Rt,n définissant ainsi pour chacune des combustions s'il y a eu ou non un raté de combustion.

On peut également envisager en variante de réalisation de n'éliminer que du seul calcul de grandeur statistique ETCg,n ou de celle de MCg,n, l'incidence des ratés de combustion survenus durant la période observée.

A partir de l'information Rt,n indiquant ou non l'existence d'un raté de combustion, quel que soit le calcul mis en oeuvre, il est alors possible de produire une information plus élaborée donnant le nombre de ratés de combustion survenus dans un cylindre donné i considéré pendant un nombre donné de cycles moteur. Seule en effet la détection d'un nombre significatif de ratés de combustion implique l'existence d'un véritable dysfonctionnement du moteur auquel il convient de remédier.

Cette information élaborée peut être réalisée de différentes manières suivant que la sommation des ratés "élémentaires" s'opère périodiquement sur des plages données de valeurs, par exemple tous les mille cycles moteur, ou que la sommation s'opère à chaque combustion sur une plage glissante de valeurs, par exemple sur les mille derniers cycles.

Le dispositif présenté concerne plus particulièrement la seconde approche. Pour ce faire les valeurs Rt,n sont régulièrement réparties, "modulo quatre", dans quatre adresses distinctes correspondant chacune à un cylindre donné, l'exemple de réalisation illustré ayant trait à un moteur à quatre cylindres. En utilisant parallèlement un dispositif de détrompage cylindre, non figuré, du type de ceux utilisés pour le pilotage des systèmes d'allumage ou des systèmes d'injection on identifie alors chacun des cylindres ainsi isolé.

La répartition des valeurs est mise en oeuvre par un système de type démultiplexeur 101 de caractéristique quatre égal au nombre de cylindre. Les valeurs successives du signal Rt,n sont alors identifiées sous la forme RT,n,i où i renvoie au cylindre considéré et n au nombre de combustions identifiées jusque là dans ce cylindre.

Les valeurs affectées à un cylindre donné alimentent un registre à décalage 161 apte à stocker un nombre donné de valeurs, par exemple pour mille valeurs, le stockage de la valeur Rt,n,i coïncidant avec le destockage de la valeur Rt,n,i-1000.

Les valeurs stockées dans le registre à décalage 161 sont additionnées dans un sommateur 171 qui génère une valeur T,n,i correspondant à la somme des valeurs Rt,n,i correspondant aux 1000 derniers cycles du moteur. Cette valeur T,n,i est ensuite comparée à une valeur de seuil S dans un comparateur 181 produisant une valeur de type binaire W,n,i indiquant la présence ou non de ratés de combustions pour le cylindre i considéré ; W,n,i vaut 0 si T,n,i < S, et 1 si T,n,i > S.

Cette valeur de seuil S est déterminée à la fois par des normes législatives et/ou des mesures expérimentales opérées sur le moteur. On peut par exemple prendre pour S la valeur 200, ce qui signifie que la détection de plus de deux cents ratés sur les mille derniers cycles signifie l'existence de dysfonctionnements dans le cylindre i considéré.

La valeur W,n,i est alors exploitée dans des moyens de visualisation tel qu'un voyant d'alerte ou encore un calculateur de bord 191 de façon à prévenir le conducteur d'un dysfonctionnement de la combustion dans le cylindre i.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi il est possible d'opérer la détection des ratés de combustion en différenciant dès le départ chacun des cylindres. Dans le mode de réalisation décrit ci-dessus les grandeurs statistiques MCg,n et ETCg,n sont calculées en tenant compte des différentes valeurs de couples mesurées successivement sur l'ensemble des cylindres et les éventuels ratés de combustion repérés sont ensuite affectés par un système de type démultiplexeur 101 à chaque cylindre correspondant.

Dans une variante de réalisation on peut donc opérer la détection des ratés de combustion en dissociant chaque cylindre pour le calcul des grandeurs statistiques.

Pour ce faire, les valeurs successives de couple Cg,n calculées après chaque combustion par les moyens 10 sont directement traitées par un système démultiplexeur 101 de caractéristique égal au nombre des cylindres. Les valeurs successives de couple Cg,n sont alors identifiées sous la forme Cg,n,i où i renvoie au cylindre considéré. On procède alors pour chacun des cylindres au calcul des grandeurs statistiques correspondantes MCg,n,i et ETCg,n,i et à l'élaboration d'un seuil correspondant S,n,i permettant de déterminer la survenue d'un éventuel raté de combustion. Cette différenciation des cylindres, permet d'opérer une détection des ratés plus précise en tenant compte de différences de combustion entre les cylindres.

Ainsi, il est également possible de prendre en compte la valeur brute de la seconde grandeur statistique, représentative des variations de la valeur du couple autour de la moyenne, pour valider la détection des ratés de combustion opérée ou bien encore surveiller la qualité des combustions de tels ou tels cylindres et en déduire un indicateur correspondant apte à diagnostiquer d'éventuels dysfonctionnements du cylindre ou des cylindres concernés.

En effet le procédé décrit ci-dessus bien qu'utilisant un seuil S,n adaptatif évoluant en fonction de l'instabilité des combustions (et donc de l'écart type), peut conduire à des résultats erronés lorsque le niveau des instabilités dépasse un certain seuil, notamment lors de passages sur des revêtements particulièrement endommagés. On peut donc opérer un contrôle du procédé de détection des ratés de détection en arrêtant l'élaboration du signal Rt,n tant que la valeur de la seconde grandeur statistique demeure au-dessus d'un seuil prédéterminé.

Pour ce qui est de la mise en oeuvre du dispositif de détection des ratés de combustion, quelle que soit la variante choisie, elle peut être réalisée sous diverses formes :

- soit avec des composants d'électronique analogique pour lesquels les sommateurs, comparateurs et autres filtres sont réalisés à l'aide d'amplificateurs opérationnels ;
- soit avec des composants d'électronique numérique qui réaliseraient la fonction en logique câblée ;
- soit par un algorithme de traitement du signal implanté sous forme d'un module logiciel composant d'un système logiciel de contrôle moteur faisant fonctionner le microcontrôleur d'un calculateur électronique.
- soit encore, par une puce spécifique (custom) dont les ressources hardware et software auront été optimisées pour réaliser les fonctions objet de l'invention : puce microprogrammable ou non, encapsulée séparément ou bien tout ou partie d'un coprocesseur implanté dans un microcontrôleur ou microprocesseur etc.

De même l'invention comprend tous les équivalents techniques appliqués à un moteur à combustion interne quels que soient son cycle de combustion (2 temps,4 temps), le carburant utilisé diesel ou essence ou encore, le nombre de ses cylindres.

## Revendications

1. Procédé pour détecter un raté de combustion survenant dans au moins un cylindre d'un moteur à combustion interne, caractérisé en ce qu'il comprend les opérations suivantes :

- Produire à chaque combustion une valeur (Cg,n ; Cg,n,i) caractéristique de ladite combustion ;
- calculer à partir de ladite valeur caractéristique (Cg,n ; Cg,n,i) la valeur d'une première grandeur statistique (MCg,n ; MCg,n,i) représentative de la moyenne des valeurs caractéristiques (Cg,n) sur un nombre donné de combustions ;

- calculer à partir de ladite valeur caractéristique (Cg,n ; Cg,n,i) la valeur d'une seconde grandeur statistique (ETCg,n ; ETCg,n,i) représentative des variations des valeurs caractéristiques (Cg,n ; Cg,n,i) sur un nombre donné de combustions ;
- calculer à partir de ladite valeur de la première grandeur statistique (MCg,n ; MCg,n,i) et de ladite valeur de la seconde grandeur statistique (ETCg,n ; ETCg,n,i), une valeur de seuil (S,n ; S,n,i) ;
- produire une valeur (Rt,n ; Rt,n,i,) indiquant l'existence d'un raté de combustion quand ladite valeur (Cg,n ; Cg,n,i) caractéristique de ladite combustion est supérieure à ladite valeur de seuil (S,n ; S,n,i).

2. Procédé pour détecter un raté de combustion selon la revendication 1, caractérisé en ce que la seconde grandeur statistique (ETCg,n ; ETCg,n,i) représentative des variations des valeurs caractéristiques (Cg,n ; Cg,n,i) est représentative de l'écart type des valeurs caractéristiques (Cg,n ; Cg,n,i).

3. Procédé pour détecter un raté de combustion selon la revendication 2, caractérisé en ce qu'il comprend les opérations suivantes :

- Produire à chaque combustion une valeur (Cg,n ; Cg,n,i) caractéristique de ladite combustion ;
- calculer à partir de cette valeur caractéristique (Cg,n ; Cg,n,i) une première grandeur statistique (MCg,n ; MCg,n,i) représentative de la moyenne des valeurs caractéristiques (Cg,n) sur un nombre donné de combustions ;
- calculer l'écart (ECg,n ; ECg,n,i) entre ladite première grandeur statistique (MCg,n ; MCg,n,i) et ladite valeur caractéristique (Cg,n ; Cg,n,i) ;
- calculer à partir de chaque écart (ECg,n ; ECg,n,i) une seconde grandeur statistique (ETCg,n ; ETCg,n,i) représentative de l'écart type des valeurs caractéristiques (Cg,n ; Cg,n,i) sur un nombre donné de combustions ;
- comparer ladite valeur d'écart (ECg,n ; ECg,n,i) à une valeur de seuil (S,n ; S,n,i) déduite de ladite seconde grandeur statistique (ETCg,n ; ETCg,n,i) ;
- produire une valeur (Rt,n ; Rt,n,i,) indiquant l'existence d'un raté de combustion quand ladite valeur d'écart (ECg,n ; ECg,n,i) est supérieure à ladite valeur de seuil (S,n ; S,n,i).

4. Procédé pour détecter un raté de combustion selon l'une quelconque des revendications 1 à 3, caractérisé en ce que la valeur caractéristique de la combustion est la valeur représentative du couple (Cg,n ; Cg,n,i) générée par la combustion produite par des moyens de mesure appropriés (10).

5. Procédé pour détecter un raté de combustion selon l'une quelconque des revendications 1 à 4, caractérisé en ce que l'une et/ou l'autre desdites grandeurs statistiques (MCg',n, ETCg',n) sont calculées en ne tenant compte que des valeurs caractéristiques (Cg',n) qui ne correspondent pas à des ratés de combustion.

6. Procédé pour détecter un raté de combustion selon l'une quelconque des revendications 1 à 5, caractérisé en ce qu'il comporte l'opération supplémentaire suivante :

- produire une valeur (Rt,n,i) indiquant l'existence d'un raté de combustion pour un cylindre (i) donné du moteur.

7. Procédé pour détecter un raté de combustion selon l'une quelconque des revendications 1 à 5, caractérisé en ce que les valeurs caractéristiques de la combustion (Cg,n,i) sont différenciées en fonction des cylindres correspondants et en ce que les différentes opérations de calcul sont opérées cylindre par cylindre de façon alors à produire directement une valeur (Rt,n,i) indiquant l'existence d'un raté de combustion pour un cylindre (i) donné du moteur.

8. Procédé pour détecter un raté de combustion selon l'une quelconque des revendications 1 à 7, caractérisé en ce qu'il comporte les opérations supplémentaires suivantes :

- calculer à partir des valeurs (Rt,n,i) indiquant l'existence d'un raté de combustion dans un cylindre (i) du moteur, le nombre total (T,n,i) de ratés de combustion survenus pendant un nombre prédéterminé de cycles moteur ;
- comparer ledit nombre total (T,n,i) de ratés de combustion à une valeur de seuil prédéterminée (S) ;
- produire une valeur (W,n,i) indiquant l'existence d'un nombre anormal de ratés de combustion dans un cylindre (i) du moteur quand ledit nombre (T,n,i) est supérieur à ladite valeur de seuil (S).

9. Procédé pour détecter un raté de combustion selon la revendication 8, caractérisé en ce que les valeurs (W,n,i) indiquant la présence ou non d'un nombre anormal de ratés de combustion dans un cylindre (i) du moteur sont utilisées par des moyens de visualisation (191).

10. Procédé pour détecter un raté de combustion selon l'une quelconque des revendications 1 à 9, caractérisé en ce que la production d'une valeur (Rt,n ; Rt,n,i) indiquant l'existence d'un raté de combustion est suspendue tend que la valeur de la seconde grandeur statistique est supérieure à une valeur de seuil prédéterminée.

**Patentansprüche**

1. Verfahren zur Feststellung einer Fehlzündung in zumindest einem Zylinder eines Verbrennungsmotors, dadurch gekennzeichnet, daß dieses die folgenden Operationen umfaßt:

   - Bei jeder Verbrennung Ermittlung eines Werts (Cg,n; Cg,n,i), der für die genannte Verbrennung charakteristisch ist;
   - ausgehend von dem genannten charakteristischen Wert (Cg,n; Cg,n,i) Berechnung des Werts einer ersten statistischen Größe (MCg,n; MCg,n,i), die den Mittelwert der charakteristischen Werte (Cg,n) einer gegebenen Anzahl von Verbrennungen darstellt;
   - ausgehend von dem genannten charakteristischen Wert (Cg,n; Cg,n,i) Berechnung des Werts einer zweiten statistischen Größe (ETCg,n; ETCg,n,i), die die Schwankungen der charakteristischen Werte (Cg,n; Cg,n,i) über eine gegebene Anzahl von Verbrennungen hinweg darstellt;
   - ausgehend von dem genannten Wert der ersten statistischen Größe (MCg,n; MCg,n,i) und dem genannten Wert der zweiten statistischen Größe (ETCg,n; ETCg,n,i) Berechnung eines Schwellenwerts (S,n; S,n,i);
   - Ermittlung eines Werts (Rt,n; Rt,n,i), der das Vorhandensein einer Fehlzündung anzeigt, wenn der genannte Wert (Cg,n; Cg,n,i), der für die genannte Verbrennung charakteristisch ist, über dem genannten Schwellenwert (S,n; S,n,i) liegt.

2. Verfahren zur Feststellung einer Fehlzündung nach Anspruch 1, dadurch gekennzeichnet, daß die zweite statistische Größe (ETCg,n; ETCg,n,i), die die Schwankungen der charakteristischen Werte (Cg,n; Cg,n,i) darstellt, die typische Differenz der charakteristischen Werte (Cg,n; Cg,n,i) darstellt.

3. Verfahren zur Feststellung einer Fehlzündung nach Anspruch 2, dadurch gekennzeichnet, daß dieses folgende Operationen umfaßt:

   - Bei jeder Verbrennung Ermittlung eines Werts (Cg,n,; Cg,n,i), der für die genannte Verbrennung charakteristisch ist;
   - ausgehend von diesem charakteristischen Wert (Cg,n; Cg,n,i) Berechnung einer ersten statistischen Größe (MCg,n; MCg,n,i), die den Mittelwert der charakteristischen Werte (Cg,n) einer gegebenen Anzahl von Verbrennungen darstellt;
   - Berechnung der Differenz (ECg,n; ECg,n,i) zwischen der genannten ersten statistischen Größe (MCg,n; MCg,n,i) und dem genannten charakteristischen Wert (Cg,n; Cg,n,i);
   - ausgehend von jeder Differenz (ECg,n; ECg,n,i) Berechnung einer zweiten statistischen Größe (ETCg,n; ETCg,n,i), die die typische Differenz der charakteristischen Werte (Cg,n; Cg,n,i) über eine gegebene Anzahl von Verbrennungen hinweg darstellt;
   - Vergleich des genannten Werts der Differenz (ECg,n; ECg,n,i) mit einem Schwellenwert (S,n; S,n,i), der von der genannten zweiten statistischen Größe (ETCg,n; ETCg,n,i) abgeleitet wird;
   - Ermittlung eines Werts (Rt,n; Rt,n,i), der das Vorhandensein einer Fehlzündung anzeigt, wenn der genannte Wert der Differenz (ECg,n; ECg,n,i) über dem genannten Schwellenwert (S,n; S,n,i) liegt.

4. Verfahren zur Feststellung einer Fehlzündung nach einem der Ansprüche 1 bis 3, dadurch gekennzeichnet, daß der charakteristische Wert der Verbrennung der Wert ist, der das von der Verbrennung erzeugte Drehmoment (Cg,n; Cg,n,i) darstellt und durch geeignete Meßvorrichtungen (10) ermittelt wird.

5. Verfahren zur Feststellung einer Fehlzündung nach einem der Ansprüche 1 bis 4, dadurch gekennzeichnet, daß die Werte der einen und/oder der anderen statistischen Größe (MCg',n, ETCg',n) so berechnet werden, daß dabei nur diejenigen charakteristischen Werte (Cg',n) berücksichtigt werden, die nicht Fehlzündungen entsprechen.

6. Verfahren zur Feststellung einer Fehlzündung nach einem der Ansprüche 1 bis 5, dadurch gekennzeichnet, daß dieses die folgende zusätzliche Operation umfaßt:

- Ermittlung eines Werts (Rt,n,i), der das Vorhandensein einer Fehlzündung für einen gegebenen Zylinder (i) des Motors anzeigt.

7. Verfahren zur Feststellung einer Fehlzündung nach einem der Ansprüche 1 bis 5, dadurch gekennzeichnet, daß die charakteristischen Werte der Verbrennung (Cg,n,i) je nach dem entsprechenden Zylinder unterschieden werden und die verschiedenen Berechnungsoperationen Zylinder für Zylinder durchgeführt werden, so daß direkt ein Wert (Rt,n,i) ermittelt wird, der das Vorhandensein einer Fehlzündung in einem gegebenen Zylinder (i) des Motors anzeigt.

8. Verfahren zur Feststellung einer Fehlzündung nach einem der Ansprüche 1 bis 7, dadurch gekennzeichnet, daß dieses folgende zusätzliche Operationen umfaßt:

- Ausgehend von den Werten (Rt,n,i), die das Vorhandensein einer Fehlzündung in einem Zylinder (i) des Motors anzeigen, Berechnung der Gesamtzahl (T,n,i) der Fehlzündungen, die während einer bestimmten Anzahl von Motorzyklen aufgetreten sind;
- Vergleich der genannten Gesamtzahl (T,n,i) der Fehlzündungen mit einem bestimmten Schwellenwert (S);
- Ermittlung eines Werts (W,n,i), der das Vorhandensein einer abnormalen Anzahl von Fehlzündungen in einem Zylinder (i) des Motors anzeigt, wenn die genannte Anzahl (T,n,i) über dem genannten Schwellenwert (S) liegt.

9. Verfahren zur Feststellung einer Fehlzündung nach Anspruch 8, dadurch gekennzeichnet, daß die Werte (W,n,i), die das Vorhandensein bzw. Nichtvorhandensein einer abnormalen Anzahl von Fehlzündungen in einem Zylinder (i) des Motors anzeigen, von optischen Anzeigemitteln (191) verwendet werden.

10. Verfahren zur Feststellung einer Fehlzündung nach einem der Ansprüche 1 bis 9, dadurch gekennzeichnet, daß die Ermittlung eines Werts (Rt,n; Rt,n,i), der das Vorhandensein einer Fehlzündung anzeigt, nicht durchgeführt wird, solange der Wert der zweiten statistischen Größe über einem bestimmten Schwellenwert liegt.

**Claims**

1. A process for detecting a misfire occurring in at least one cylinder of an internal combustion engine characterised in that it comprises the following operations:

   - producing at each combustion a value (Cg,n; Cg,n,i) which is characteristic of said combustion;
   - calculating from said characteristic value (Cg,n; Cg,n,i) the value of a first statistical magnitude (MCg,n; MCg,n,i) representative of the mean of the characteristic values (Cg,n) over a given number of combustions;
   - calculating from said characteristic value (Cg,n; Cg,n,i) the value of a second statistical magnitude (ETCg,n; ETCg,n,i) representative of the variations in the characteristic values (Cg,n; Cg,n,i) over a given number of combustions;
   - calculating from said value of the first statistical magnitude (MCg,n; MCg,n,i) and said value of the second statistical magnitude (ETCg,n; ETCg,n,i) a threshold value (S, n; S,n,i); and
   - producing a value (Rt,n; R,t,n,i) indicating the existence of a misfire when said value (Cg,n; Cg,n,i) characteristic of said combustion is greater than said threshold value (S,n; S,n,i).

2. A process for detecting a misfire according to claim 1 characterised in that the second statistical magnitude (ETCg,n; ETCg,n,i) representative of the variations in the characteristic values (Cg,n; Cg,n,i) is representative of the typical difference in the characteristic values (Cg,n; Cg,n,i).

3. A process for detecting a misfire according to claim 2 characterised in that it comprises the following operations:

   - producing at each combustion a value (Cg,n; Cg,n,i) which is characteristic of said combustion;
   - calculating from said characteristic value (Cg,n; Cg,n,i) a first statistical magnitude (MCg,n; MCg,n,i) representative of the mean of the characteristic values (Cg,n) over a given number of combustions;
   - calculating the difference (ECg,n; ECg,n,i) between said first statistical magnitude (MCg,n; MCg,n,i) and said characteristic value (Cg,n; Cg,n,i);
   - calculating from each difference (ECg,n; ECg,n,i) a second statistical magnitude (ETCg,n; ETCg,n,i) representative of the typical difference in the characteristic values (Cg,n; Cg,n,i) over a given number of combustions;

- comparing said value of the difference (ECg,n; ECg,n,i) to a threshold value (S,n; S,n,i) deduced from said second statistical magnitude (ETCg,n; ETCg,n,i); and
- producing a value (Rt,n; R,t,n,i) indicating the existence of a misfire when said difference value (ECg,n; ECg,n,i) is greater than said threshold value (S,n; S,n,i).

4.  A process for detecting a misfire according to any one of claims 1 to 3 characterised in that the characteristic value of combustion is the value representative of the torque (Cg,n; Cg,n,i) generated by the combustion as produced by suitable measuring means (10).

5.  A process for detecting a misfire according to any one of claims 1 to 4 characterised in that one and/or the other of said statistical magnitudes (MCg',n, ETCg',n) are calculated taking account only of the characteristic values (Cg',n) which do not correspond to misfires.

6.  A process for detecting a misfire according to any one of claims 1 to 5 characterised in that it comprises the following additional operation:

- producing a value (Rt,n,i) indicating the existence of a misfire for a given cylinder (i) of the engine.

7.  A process for detecting a misfire according to any one of claims 1 to 5 characterised in that the characteristic values of combustion (Cg,n,i) are differentiated in dependence on the corresponding cylinders and that the different calculation operations are implemented cylinder by cylinder so as then directly to produce a value (Rt,n,i) indicating the existence of a misfire for a given cylinder (i) of the engine.

8.  A process for detecting a misfire according to any one of claims 1 to 7 characterised in that it comprises the following additional operations:

- calculating from the values (Rt,n,i) indicating the existence of a misfire in a cylinder (i) of the engine the total number (T,n,i) of misfires which occurred during a predetermined number of engine cycles;
- comparing said total number (T,n,i) of misfires to a predetermined threshold (S); and
- producing a value (W,n,i) indicating the existence of an abnormal number of misfires in a cylinder (i) of the engine when said number (T,n,i) is greater than said threshold value (S).

9.  A process for detecting a misfire according to claim 8 characterised in that the values (W,n,i) indicating the presence or absence of an abnormal number of misfires in a cylinder (i) of the engine are used by display means (191).

10.  A process for detecting a misfire according to any one of claims 1 to 9 characterised in that the production of a value (Rt,n; Rt,n,i) indicating the existence of a misfire is suspended as long as the value of the second statistical magnitude is greater than a predetermined threshold.

FIG.1